# EUROPEAN PATENT APPLICATION

(11) **EP 2 620 902 A1**
(43) Date of publication of application: **31.07.2013**
(21) Application number: 12186841.8
(22) Date of filing: 01.10.2012
(51) Int. Cl.: G06Q 20/20, G06Q 20/18, G06Q 20/40

(54) **Central security device, system and method for smart cards**

(30) Priority: 30.09.2011 HU 1100547
(71) Applicant: Netlock Kft., 1023 Budapest (HU)
(72) Inventor: Rózsehegyi, Zsolt, 1023 Budapest (HU)
(74) Representative: Kacsuk, Zsófia

(57) **Abstract**

The invention relates to a central security device for smart cards. The central security device (1) is connectable, via a data communication channel (15), to at least one terminal (10) suitable for performing card operations on a smart card (20), and the central security device comprises:
- a central key storing and handling module (3) for storing and handling one or more symmetric or asymmetric keys necessary for performing card operation on smart cards (20);
- a terminal interface (2) connected therewith for performing card operation on smart cards (20) over the at least one terminal (2).

The invention further relates to a central security system for smart cards, characterised by comprising such a central security device (1) and at least one terminal (10) suitable for performing card operations on a smart card (20) and being connectable with the central security device (1) via a data communication channel (15).

The invention further relates to a central security method for performing card operation on smart cards (20). The method comprises the steps of:
- reading in card data from a smart card (20) by a terminal (1) suitable for performing card operation on smart cards (20), upon detection of the smart card (20);
- creating a terminal side data package by the terminal (10) using the card data read from the smart card (20);
- transmitting the terminal side data package to a central security device (1) over a data communication channel (15) established between the terminal (10) and the central security device (1);
- generating, based on the terminal side data package, a key by a key storing and handling module (3) of the central security device (1) for performing a given card operation;
- creating by the central security device (1) a central side data package for performing the given card operation using the generated keys, which central side data package is optionally authenticated and encoded;
- transmitting the central side data package to the terminal (10) over a data communication channel (15) which is optionally authenticated and encoded;
- performing the given card operation by the terminal (10) using the received central side data package.

## Description

The present invention relates to a central security device, system and method for smart cards.

Smart cards and in particular contactless cards are used in great numbers in various fields, for example in the field of public transportation for handling tickets, or in other fields for identifying products, for security identification and for payment. The data stored on the smart cards are written on and read from the smart cards by special terminals through a wireless or wired interface. In order to prevent access to the data that is to be read from or written on the smart card by listening to the communication, and in order to prevent such data being read from the smart card, the data is encrypted by the reader and by the smart card itself, whereby the data can only be accessed with the appropriate encrypting/decrypting symmetric or asymmetric keys. These keys are stored in the terminals or in a security module therein. The security module - called security access module (SAM) or security application module is a microchip which stores these keys and performs operations therewith (e.g. authentication of access and of the data, encoding and decoding data, key diversification (derivation) i.e. deriving individualised keys, generating permanent and temporal keys, replacing keys). This solution is only secure as long as the terminal or security module is not stolen, because in the latter case unauthorised persons may be able to write data on the smart cards, or to access the data written on the smart cards. Moreover, this may be performed in a way that cannot be detected afterwards, since the operations do not require central permission and are not logged centrally.

Patent specification EP0874334 discloses a terminal including such a security module having the above mentioned disadvantage.

It is an object of the present invention to provide a device and method that overcome the problems associated with the prior art.

In particular, it is an object of the invention to prevent unauthorised persons gaining access to the keys for writing, reading and generally handling smart cards, i.e. to prevent writing and reading smart cards and performing other card operations by taking physical possession of the smart card reading and writing terminals, and the security modules thereof. It is a further object to ensure that all card operations are registered centrally and are controllable.

The above objects are achieved by the central security device according to claim 1 and the central security method according to claim 8.

Some advantageous embodiments of the invention are defined in the dependent claims.

Further details of the invention will be explained by way of exemplary embodiments with reference to the figure.

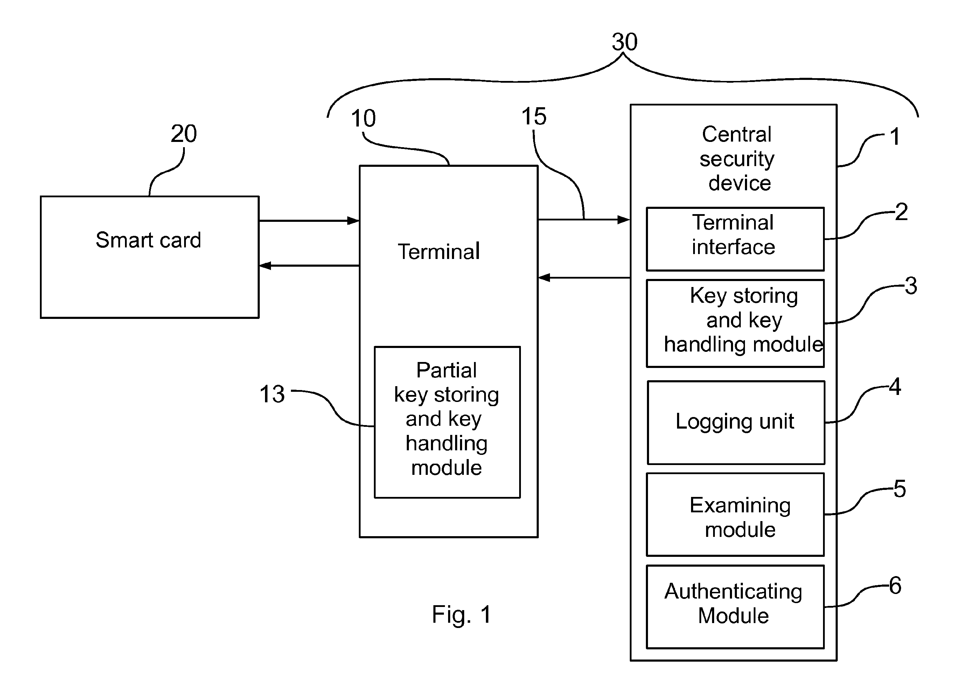

Fig. 1 is a block diagram of a central security system according to the invention.

The central security system 30 depicted in Fig. 1 comprises a central security device 1 and a physically remote terminal 10. The two are connectable by a data communication channel 15 in order to establish connection between the two.

The terminal 10 is designed for performing card operations on smart cards 20 that can be contactless or contact cards 20 as well. There are basically two types of card operations depending on whether the operation requires reading or writing the smart cards 20. Certain applications can be envisaged where reading of the smart cards 20 is sufficient, however, preferably the terminal 10 is suitable for both reading and writing smart cards 20. In the following description the invention will be described by referring to a card reader-writer terminal 10, however, the description is also understood to relate to terminals for reading only. Such smart card reader-writer terminals are known, for example from the field of public transport, hence the detailed description of the structure of such a terminal is not discussed herein. Readable/writable smart cards 20 that can be read and written by such known terminals are also known from the art, hence the structure of such smart cards 20 will not be detailed herein either.

It should be noted that although in Fig. 1 only one terminal 10 is depicted, nevertheless, the central security system 30 typically comprises more, tens or hundreds or thousands of such terminals 10. Furthermore, the number of central security devices 1 is also not limited to one, it is conceivable that e.g. in the case of mobile terminals 10 a plurality of central security devices 1 are capable of performing the method according to the invention, and the mobile 10 terminal establishes connection with the central security device 1 with which the best quality data communication channel can be established having regard to the momentary location of the terminal 10. Thus, the central security system 30 according to the invention may be adapted to handle any number of terminals 10 and thereby any number of smart cards 20, moreover it can also function in case of mixed operation wherein conventional terminals 10 are also used and in certain cases the conventional terminals perform the reading and/or writing of the smart cards 20 directly, as will be explained in more detail later on.

The data communication channel 15 can be realised in a wired network, or in a wireless network (e.g. based on the IEEE 802.11 or other mobile data transmission standard) or in a mixed network depending on the application. The data communication channel 15 is understood to include all the physical devices (e.g. optical cable, distributor, switch, hub, etc.) connecting the central security device 1 and the terminal 10. The network may be a local area network (LAN) or wireless local area network (WLAN), such as a network formed between ticket validating terminals 10 placed in the passenger area of a bus or other public transport means or in the public area of box-offices and between a central security device 1 placed for security reasons inside the compartment of the driver or in the proximity of the driver. However, the network may be a wide area network (WAN) as well, which can be typically the Internet, but it may also be less wide such as a metropolitan area network (MAN). The data communication channel 15 may be realised by such a wide area network, for example between the ticket issuing/recharging terminals 10 situated in the waiting rooms of a public transport company and between the central security device 1 situated in a remote server room.

The central security device 1 may be for example a computer, especially a server, in a given case supplemented with a special purpose hardware, and - in contrast to the typically publicly accessible terminals 10 - it is located in a secure place that is not accessible by unauthorised persons, such as inside a server room. However, the central security device 1 may also be placed e.g. on a bus (e.g. next to the driver) or in a box-office (at a pay-desk) in a secure way, whilst the terminals 10 are in the passenger area or e.g. in the waiting room in a less protected environment. In such cases the central security device 1 serves as a local centre handling one or more terminals 10 in its environment (e.g. on a bus or in a waiting room).

The central security device 1 comprises a terminal interface 2 with the help of which the central security device 1 is capable of communicating with the terminal 10 and thereby capable of performing card operations on a smart card 20 (i.e. reading and writing a smart card 20) placed inside the terminal 10 or in its working range as will be explained later on.

The central security device 1 further comprises a central key storing and handling module 3 storing and handling the symmetric and asymmetric keys necessary for reading and writing the smart cards 20 and with the help of which the key generating operations, authorisations, encoding and decoding operations can be performed in connection with reading and writing the smart cards 20. The different keys may provide authorisation for accessing different data areas of the smart cards 20 and/or for performing different operations thereon. Preferably the keys of the different smart cards 20 are derived from a master key by key diversification (universal key generation). The master key is preferably stored in the key storing and handling module 3 of the central security device 1 which can be regarded as a protected environment, and the key storing and handling module 3 uses the master key and data sent by the smart card 20 as will be explained later on, to perform key generation, key diversification, authentication, encryption and decryption.

The key storing and handling module 3 may be the already mentioned security access module (SAM). According to a particularly advantageous embodiment the key storing and handling module 3 is a hardware security module (HSM), which is provided with the required specific cryptographic functionality. The advantage of the security access module and the hardware security module is that on the one hand both are special purpose hardware, thus they are less prone to external attacks than, for example, a general purpose computer, and on the other hand both are suitable or can be made suitable with certain supplements, to perform the key storing and key handling functions that are necessary for the implementation of the method according to the invention. The hardware security module (HSM) is further advantageous compared to the security access module (SAM) in that it ensures substantially greater performance, furthermore, it can be regarded more secure since it is also capable of generating keys, thus the keys never have to leave the hardware security module. As opposed to this, the security access module (SAM) is not capable of key generation, thus the keys have to be generated externally and inputted into the security access module.

The handled keys may serve various purposes, such as authentication of the smart card 20 and replacing keys. The keys are handled according to these purposes when carrying out the method according to the invention (e.g. the authenticating key is used to authenticate the smart card 20).

The advantage of storing and handling the keys centrally is that the keys for reading and writing the smart cards 20 cannot fall into the hands of unauthorised persons by appropriating the terminal 10, thus it is not possible to misuse the appropriated terminal 10 for writing e.g. data representing value on the smart card 20 (e.g. writing a ticket on a public transport card for travelling). Accordingly, the access to the keys stored in the key storing and key handling module 3 of the central security device 1 is preferably strictly regulated and limited, and the keys cannot be known by anybody. For example, by using the security access module (SAM) or the hardware security module (HSM) the keys cannot be read from the module 3. The physical access is preferably also limited, for example such that the central security device 1 is located in a protected server room. Furthermore, activation of the central security device 1 (e.g. by a PIN code) may be required before use. Security can be further enhanced by allowing only the system administrator access to the central security device 1 after successful authentication.

It is to be noted that certain card operations can be defined within the category of card writing (e.g. performing data modification in order to reflect the available tickets remaining after use of a ticket; or logging certain data) that can be performed locally without central supervision since gaining authorisation to perform such card operations cannot be misused in a financially damaging way (as opposed to e.g. writing a ticket on the card as another type of possible card operation). The inventors have realised that if different keys are provided for such locally performable card operations, the misappropriation of which keys does not present a serious security risk, then these keys can be stored in a less secure storage, such as an optional partial key storing and handling module 13 of the terminal 10. In such cases the earlier mentioned security access module (SAM) can be used as the partial key storing and handling module 13. This solution is extremely important for example in public transport applications, where the partial key storing and handling module 13 of the terminals 10 may store the key required for validating (using) the tickets stored on the smart card 20, hence the owner of the smart card 20 can "validate" his or her "ticket" even when the communication channel 15 between the terminal 10 and the remote central security device 1 is not active (e.g. the bus enters a tunnel where there is no wireless force field), or connection cannot be established over the communication channel 15 for any reason. However, preferably a different key is needed to write the newly bought tickets on the smart card 20, which key is stored and handled by the central key storing and handling module 3, whereby this card operation can only be performed centrally on the smart card 20. Hence, even by appropriation of the terminal 1 comprising the partial key storing and handling module 13 for decreasing the ticket value (i.e. for validating the ticket) the unauthorised person cannot write additional tickets onto the smart card 20 and cannot thereby cause financial damage to the public transport company. Naturally, the locally performable card operations that do not present a security risk and/or possibility of financially damaging misuse can be determined in accordance with the specific application, and the corresponding keys can be stored and handled locally by the partial key storing and handling module 13 of the terminal 10, whilst the keys required for the type of card operations that could present a security risk and/or possibility of financially damaging misuse are stored and handled exclusively by the key storing and handling module 3 of the central security device 1. Accordingly, it is possible to distinguish between locally performable card operations that do not require central supervision and central key handling, and increased security card operations for which the key storing and handling module 3 of the central security device 1 stores and handles the necessary keys, and which are preferably centrally logged as follows.

Preferably the central security device 1 comprises a logging unit 4 with the help of which all operations can be logged. Such operations are e.g. the key generation, data authentication, data encoding and decoding. Further operations that can be logged comprise the sending of queries by the terminal 10 and the sending of notifications in connection with authentication of the terminal 10 and the verification of card operation authorisations. Naturally any other operation may be logged as well, including the mere detection of certain actions (e.g. attempt to break into the central security system 30).

Preferably the central security device 1 further comprises an authentication module 6, which serves to authenticate the terminal 10 before performing the required card operation, and the card operation is only performed in case of successful authentication. Various types of authentication protocols are known from the art (e.g. password based, certificate based, one-time password based protocols), hence these will not be discussed in further detail herein.

Preferably the central security device 1 further comprises an examining module 5 which serves to examine the terminal's 10 authorisation for the performance of the operation initiated therewith. In the absence of authorisation the card operation is not performed. Recording and handling authorisations within an IT system is also well known in the art (e.g. using address files, databases, etc.), hence this will not be discussed in more detail herein.

The operation of the central security system 30 according to the invention is as follows.

When the holder of the smart card 20 (i.e. the card holder) or the personal handling the terminal 10 (e.g. a cashier) wishes to perform some kind of operation on the smart card 20 (e.g. writing tickets on a public transport card, or using the tickets already written on the card) then the smart card 20 is brought in communication with the card reader/writer part of the terminal 10. In case of contact smart cards 20 this typically involves placing the smart card 20 in a suitable card receiving slot of the terminal 10 for creating the contact communication, whereas in the case of a contactless smart card 20 it is sufficient to hold the smart card 20 in the proximity of the card reader/writer.

In the case of a contactless smart card 20 the terminal 10 reads card data from the contactless smart card 20 when detecting its presence, such that it emits radiofrequency signal for the typically passive contactless card 20 which is activated by the energy ensured by the external excitation and emits a response signal in reaction to the command of the terminal 10, which response signal is detected by the terminal 10. The card data is understood to comprise all the data that is transmitted by the smart card 20 to the terminal 10, this may include for example the manufacturer's data about the smart card 20 (e.g. individual identifier, type, etc.) and the user's card data, i.e. the data that is written on the card 20 during its use (e.g. the data stored on the card that are determined by the card operation). In case of a contact card 20 addressing the card 20 and reading the card data is carried out through the physical connection.

The terminal 10 creates a terminal side data package from the card data, which data package contains the card data, or a part thereof (possibly in a processed form), and preferably contains data content provided by the terminal 10. The latter can be for example data specifying the card operation to be performed and the parameters of the card operation (which may be based partly or wholly on parameters provided by the user through an interface of the terminal 10), data identifying the terminal 10, and any other application specific data.

Connection is established between the terminal 10 and the central security device 1 via the data communication channel 15. IN the context of the present invention the term "establishing a connection" refers to both the case when there was no prior open data connection between the terminal 10 and the central security device 1 over the data communication channel, and to the case when such a connection has already been opened, and only a functionally new connection is established for performing the desired card operation.

The terminal side data package that has been created by the terminal 10 is transmitted through the connection that has been established in the above described way. Thus, the card data (or a part thereof) provided by the smart card 20 is sent from the terminal 10 to the central security device 1, and in particular to its terminal interface 2. Preferably, besides sending the card data of the smart card 20, also the identification data of the terminal 10, as well as the data identifying the card operation and the parameters of the card operation are also transmitted. The card operation may be determined by the terminal 10, or a local device connected to the terminal 10, or the card holder, or the handler of the terminal (collectively referred to as: user) in any possible way (e.g. by selecting the operation via the keyboard or touchscreen of the terminal 10 or through other means). The card operation parameters may be e.g. in the case of public transport application the GPS coordinates or the code of the bus stop (or other station), which is for example determined by the terminal 10 or for example a local computer connected therewith. The data identifying the card operation may be some kind of an identifying data, by which the requested card operation can be identified centrally (e.g. adding prepaid value of ticket, validating the ticket).

Preferably the terminal 10 is authenticated by the authentication module 6 of the central security device 1 using the transmitted identification data. Furthermore the terminal's 10 authorisation to perform the requested card operation is preferably also verified. This can be performed in the following way. The data specifying the card operation, and in certain cases the card operation parameters as well, are examined by the examining module 5 of the central security device 1. The key required for the performance of the card operation is only provided in case of successful authentication and determination of the necessary authorisation, in other situations performance of the card operation is denied.

Preferably both the successful and the unsuccessful authentications and determination of authorisation or its absence are logged by the logging unit 4.

In case the authentication was successful and the authorisation determination was positive the key storing and handling module 3 of the central security device 1 generates (derives) the symmetric key necessary for performing the requested card operation using the master key stored in the key storing and handling module 3 and the terminal side data package created and sent by the terminal 10 and containing the data provided by the smart card 20 that is necessary for generating the required key. Such data is typically the individual identifier of the smart card 20. Preferably the key storing and handling module 3 is a hardware security module provided with the functions of key generation, key derivation (diversification), authentication, and encoding and decoding cryptographic functions, which generates the symmetric key required for the given card operation by key derivation based on the sent data.

A central side data package is created by the central security device 1 with the help of the generated key for performing the given card operation on the smart card 20. The central side data package is transmitted to the terminal 10 through the data communication channel 15. The central side data package contains for example the commands to be performed on the smart card 20, in case of writing: the data to be written on the smart card 20, and the location where it should be written; in case of reading: the location from where data should be read.

Preferably creation and transmission of the central side data package is also logged by the logging unit 4. The given card operation is performed by the terminal 10 using the received data package. Preferably successful performance of the card operation is confirmed to the terminal interface 2 of the central security device 1, which is preferably also logged by the logging unit 4. Unsuccessful attempt to carry out the operation is preferably also logged.

The advantage of the method according to the invention is that the keys never leave the secure environment of the key storing and handling module 3, not even when writing on the smart card 20, the keys are only used to perform the card operations.

Preferably the data (including the card data provided by the smart card 20) which is transmitted from the smart card 20 to the terminal 10, as well as between the terminal 10 and the central security device 1 is in encoded form during the transmittal. Coding and decoding within the central security device 1 is preferably also carried out with the help of the key storing and handling module 3, for which purpose the earlier mentioned hardware security model (HSM) is well suited.

In case locally performable card operations have been determined that do not require central supervision (e.g. validating tickets when used), then these can be performed by the terminal 10 with the help of the partial key storing and handling module 13 even in the absence of the data communication channel 15, or in absence of a connection thereover. In such cases the partial key storing and handling module 13 uses the card data of the smart card 20 to generate the key required for a determined card operation, and the determined card operation is performed by the terminal 10 in a known way using the generated key.

Naturally, even in this case the card operations of increased security (e.g. writing tickets), for which the central security device 1 needs to provide the central side data package containing the necessary transaction data, can only be performed if the data communication channel 15 and the connection thereover is available.

Various modifications to the above disclosed embodiments will be apparent to a person skilled in the art without departing from the scope of protection determined by the attached claims.

## Claims

1. Central security device for smart cards, **characterised in that** it is connectable, via a data communication channel (15), to at least one terminal (10) suitable for performing card operations on a smart card (20), and the central security device (1) comprises:
- a central key storing and handling module (3) for storing and handling one or more symmetric or asymmetric keys necessary for performing card operation on smart cards (20);
- a terminal interface (2) connected therewith for performing card operation on smart cards (20) over the at least one terminal (2).

2. The central security device according to claim 1, **characterised in that** the key storing and handling module (3) is a security access module (SAM) or a hardware security module (HSM) that is preferably provided with the functions of key generation, key derivation, authentication, and encoding and decoding cryptographic functions.

3. The central security device according to claim 1 or 2, **characterised by** comprising a logging unit (4) for logging operations carried out in connection with performing card operations on smart cards (20).

4. The central security device according to any of claims 1 to 3, **characterised by** comprising an authenticating module (6) for authenticating the at least one terminal (10).

5. The central security device according to any of claims 1 to 4, **characterised by** comprising an examining module (5) for examining the at least one terminal's (10) authorisation for performing a card operation requested thereby.

6. Central security system for smart cards, **characterised by** comprising the central security device (1) according to any of claims 1 to 5, and by comprising at least one terminal (10) suitable for performing card operations on a smart card (20) and being connectable with the central security device (1) via a data communication channel (15).

7. The central security device according to any of claims 1 to 6, **characterised by** that the at least one terminal (10) comprises a partial key storing and handling module (13) required for given card operations, and one or more keys required for performing other card operations are stored exclusively in the key storing and handling module (3) of the central security device (1).

8. Central security method for performing card operation on smart cards, **characterised by**:
- upon detection of a smart card reading in card data from the smart card via a terminal suitable for performing card operation on smart cards;
- creating a terminal side data package via the terminal using the card data read from the smart card;
- transmitting the terminal side data package to a central security device over a data communication channel established between the terminal and the central security device;
- generating, based on the terminal side data package, a key via a key storing and handling module of the central security device for performing a given card operation;
- creating via the central security device a central side data package for performing the given card operation using the generated keys, which central side data package is optionally authenticated and encoded;
- transmitting the central side data package to the terminal over a data communication channel which is optionally authenticated and encoded;
- performing the given card operation via the terminal using the received central side data package.

9. The method according to claim 8, **characterised by** using as the key storing and handling module a security access module (SAM) or a hardware security module (HSM) that is preferably provided with the functions of key generation, key derivation, authentication, and encoding and decoding cryptographic functions.

10. The method according to claims 8 or 9, **characterised by** that the smart card is a contactless card and the following steps are carried out for reading in card data:
- emitting radio frequency signal via the terminal upon detection of the contactless smart card;
- receiving via the terminal the card data as response signal emitted by the smart card.

11. The method according to any of claims 8 to 10, **characterised by** logging via a logging unit of the central security device operations carried out in connection with performing card operations on smart cards and logging data pertaining thereto.

12. The method according to any of claims 8 to 11, **characterised by** that the terminal side data package contains data determining a card operation and parameters of the card operation.

13. The method according to any of claims 8 to 12, **characterised by** that the terminal side data package further contains identification data of the terminal; and authenticating the terminal based on the transmitted identification data via an authenticating module of the central security device.

14. The method according to claim 13, **characterised by** examining the authorisation of the authenticated terminal for the determined card operation via the examining module of the central security device, and continuing the method only in case authorisation is determined positively.

15. The method according to any of claims 8 to 14, **characterised by** transmitting the data from the card to the terminal and between the terminal and the central security device in an encoded and/or authenticated way.

16. The method according to any of claims 8 to 15, **characterised by** providing the terminal with a partial key storing and handling module for storing and handling one or more keys required for given card operations, and performing the given card operations locally with the terminal in absence of the data communication channel or connection thereover, by:
- generating, based on the card data, a key for the given card operation via the partial key storing and handling module;
- performing the certain card operation via the terminal using the generated key.
